# EUROPEAN PATENT APPLICATION

(11) **EP 4 454 779 A1**
(43) Date of publication of application: **30.10.2024**
(21) Application number: 22911121.6
(22) Date of filing: 16.12.2022
(51) Int. Cl.: B21D 43/09

(54) **SHEET MATERIAL FEEDING DEVICE**

(30) Priority: 21.12.2021 JP 2021206584
(71) Applicant: Sankyo Seisakusho Co., Tokyo 114-8538 (JP)
(72) Inventor: SUZUKI, Kengo, Kikugawa-shi, Shizuoka 439-0018 (JP)
(74) Representative: Gevers Patents
(86) International application number: PCT/JP2022/046404
(87) International publication number: WO 2023/120418

(57) **Abstract**

Provided is a sheet material feeding device that achieves a reduction in power consumption, has improved durability, and transports a sheet material with high accuracy. This sheet material feeding device 101, which transports a sheet material clamped by a first roll 103 and a second roll 104, is equipped with a release mechanism 112 for releasing the clamped sheet material, the release mechanism 112 having an eccentric cam 201, an eccentric cam bearing 202 arranged along a side surface of the eccentric cam 201, a guide 203 arranged so as to be able to contact the eccentric cam bearing 202, and a block 204 arranged so as to be able to contact the guide 203 and connected to an upper roll support member 110. The release mechanism 112 causes the eccentric cam 201 to rotate and moves the guide 203 in a horizontal direction relative to the block 204 by means of the eccentric cam bearing 202, thereby causing the upper roll support member 110 connected to the block 204 to move in the vertical direction.

## Description

### TECHNICAL FIELD

The present invention relates to a sheet material feeding device capable of achieving a reduction in power consumption, improving durability, and transporting a sheet material to a processing device such as a press device, with high accuracy.

### BACKGROUND ART

Patent Literature 1 discloses a roll type material feeding apparatus including a frame, a first driven feed roll, a second feed roll, a first drive motor that rotates in driving engagement with the first driven feed roll, and a second drive motor that rotates in driving engagement with the first driven feed roll. Further, the roll type material feeding apparatus includes a transmission arrangement so that the second feed roll can be driven in cooperation with the first driven feed roll and the transmission arrangement includes a first drive gear attached to the first driven feed roll, a first driven gear in driving engagement with the first drive gear, and an intermediate coupling member for coupling the first driven gear to the second feed roll. Furthermore, the second feed roll is rotatably supported in a movable roll support, and a force generating actuator provided between the frame and the movable roll support cooperates with the movable roll support to generate a gripping force between the second feed roll and the first driven feed roll for gripping a workpiece between the second feed roll and the first driven feed roll.

### CITATION LIST

### PATENT LITERATURE

PATENT LITERATURE 1: JP-A-2013-536086

### SUMMARY OF INVENTION

### TECHNICAL PROBLEM

In the roll type material feeding apparatus of Patent Literature 1, the force generating actuator lifts the movable roll support that supports the second feed roll so as to release a workpiece gripped between the second feed roll and the first driven feed roll, but there is a problem in that it is necessary to use a motor or the like with a large capacity as the force generating actuator for lifting the movable roll support.

Therefore, an object of the present invention is to provide a sheet material feeding device, which solves the aforementioned problem, capable of achieving a reduction in power consumption, improving durability, and transporting a sheet material with high accuracy.

### SOLUTION TO PROBLEM

According to one point of view of the present invention, a sheet material feeding device includes: a housing; a first roll housed in the housing; a second roll housed in the housing; a first roll support member that supports the first roll; and a second roll support member that supports the second roll, in which the sheet material feeding device is configured to clamp a sheet material by the first roll and the second roll and transport the sheet material in accordance with rotations of the first roll and the second roll, and the sheet material feeding device further includes a release mechanism configured to release the sheet material clamped, in which the release mechanism includes: an eccentric cam; a bearing arranged along a side surface of the eccentric cam; a guide arranged so as to be able to contact the bearing; and a block arranged so as to be able to contact the guide and connected to one roll support member of the first roll support member and the second roll support member, and the release mechanism is configured to rotate the eccentric cam to move the guide in a horizontal direction relative to the block by means of the bearing, thereby moving the one roll support member connected to the block in a vertical direction.

According to one specific example of the present invention, the sheet material feeding device further includes: a first motor coupled to the first roll and configured to rotate the first roll; and a second motor coupled to the second roll and configured to rotate the second roll.

According to one specific example of the present invention, the sheet material feeding device further includes: a first motor coupled to one roll of the first roll and the second roll and configured to rotate the one roll; a first gear provided in a roll axis to which the one roll is fixed; and a second gear provided in a roll axis to which the other roll of the first roll and the second roll is fixed, in which the first gear and the second gear engage with each other and the other roll rotates in accordance with a rotation of the one roll by means of the first motor.

According to one specific example of the present invention, in the sheet material feeding device, the bearing includes an inner ring portion fixed along the side surface of the eccentric cam and an outer ring portion disposed so as to be able to contact the guide.

According to one specific example of the present invention, the sheet material feeding device further includes an elastic member disposed between the housing and the one roll support member, in which when the sheet material is released, the guide and the block are pressed against the eccentric cam and the bearing via the one roll support member by means of the elastic member.

According to one specific example of the present invention, in the sheet material feeding device, the elastic member is an air spring or a coil spring.

According to one specific example of the present invention, in the sheet material feeding device, the release mechanism is configured to rotate the eccentric cam so as to extend the elastic member in the vertical direction in order to move the one roll support member in the vertical direction so as to clamp the sheet material.

According to one specific example of the present invention, in the sheet material feeding device, the release mechanism is configured to provide a gap between the block and the guide when the sheet material is clamped.

According to one specific example of the present invention, the sheet material feeding device further includes a third motor, in which the release mechanism further includes a shaft coupled to the third motor and configured to rotate the eccentric cam, and the sheet material feeding device is configured to rotate the shaft in response to a rotation of the third motor so as to move the one roll support member in the vertical direction.

According to one specific example of the present invention, in the sheet material feeding device, the third motor is configured to stop rotating the eccentric cam so as to stop transporting the sheet material, with a signal from an outside of the sheet material feeding device while the eccentric cam is rotating.

### ADVANTAGEOUS EFFECTS OF INVENTION

According to the present invention, a large material gripping force can be obtained with a small drive power, so that a sheet material can be clamped and released with a reduced power consumption, and durability can be improved as compared to prior art. Further, the sheet material can be clamped and released at a high speed and can be intermittently transported by a constant amount with high accuracy.

Other objects, features and advantages of the present invention will become apparent from the following description of the embodiments of the present invention taken in conjunction with the accompanying drawings.

### BRIEF DESCRIPTION OF DRAWINGS

[FIG. 1] FIG. 1 is a schematic cross-sectional view of a sheet material feeding device as one embodiment of the present invention as viewed from a front side.
[FIG. 2] FIG. 2 is a schematic cross-sectional view of the sheet material feeding device taken along broken line II of FIG. 1 as viewed from a side.
[FIG. 3] FIG. 3 is a schematic cross-sectional view of the sheet material feeding device of FIG. 1 releasing a sheet material as viewed from the front side.
[FIG. 4] FIG. 4 is a schematic cross-sectional view of the sheet material feeding device of FIG. 1 clamping the sheet material as viewed from the front side.
[FIG. 5A] FIG. 5A is a schematic perspective view of a release mechanism as one embodiment in the sheet material feeding device of FIG. 1, in a sheet material releasing state.
[FIG. 5B] FIG. 5B is a schematic perspective view of the release mechanism as one embodiment in the sheet material feeding device of FIG. 1, shifting from a sheet material releasing state to clamping state.
[FIG. 5C] FIG. 5C is a schematic perspective view of the release mechanism as one embodiment in the sheet material feeding device of FIG. 1, shifting from the sheet material releasing state to clamping state.
[FIG. 5D] FIG. 5D is a schematic perspective view of the release mechanism as one embodiment in the sheet material feeding device of FIG. 1, in the sheet material clamping state.
[FIG. 6] FIG. 6 is a schematic perspective view showing the relation among a roll axis, a coupling device, and a gear axis as one embodiment in the sheet material feeding device of FIG. 1.
[FIG. 7] FIG. 7 is a schematic cross-sectional view of the sheet material feeding device as another embodiment of the present invention as viewed from the front side.

### DESCRIPTION OF EMBODIMENTS

Embodiments according to the present invention will be described with reference to the drawings. However, the present invention is not limited to those embodiments.

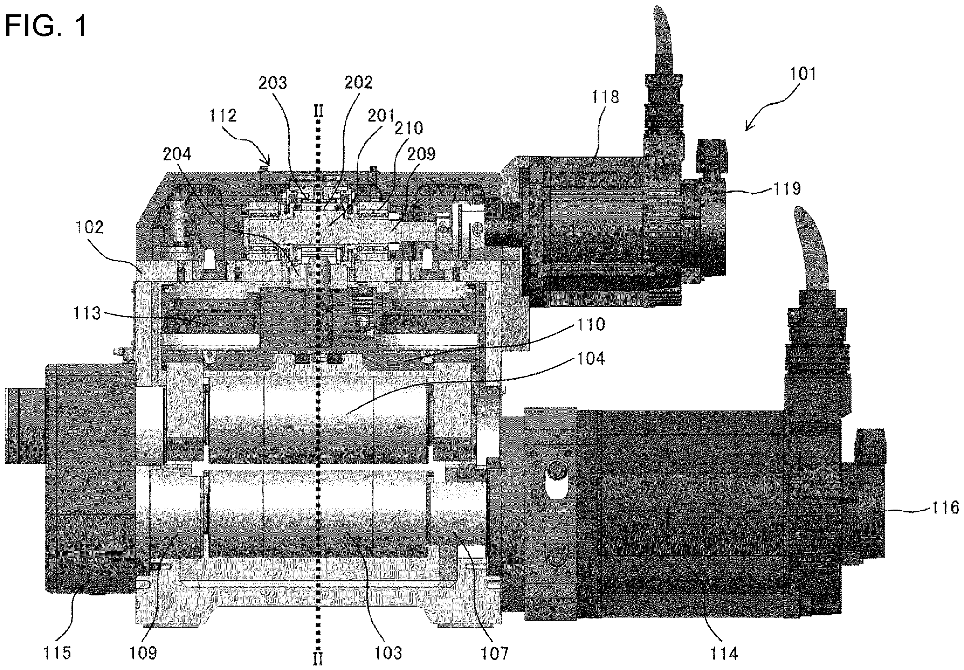

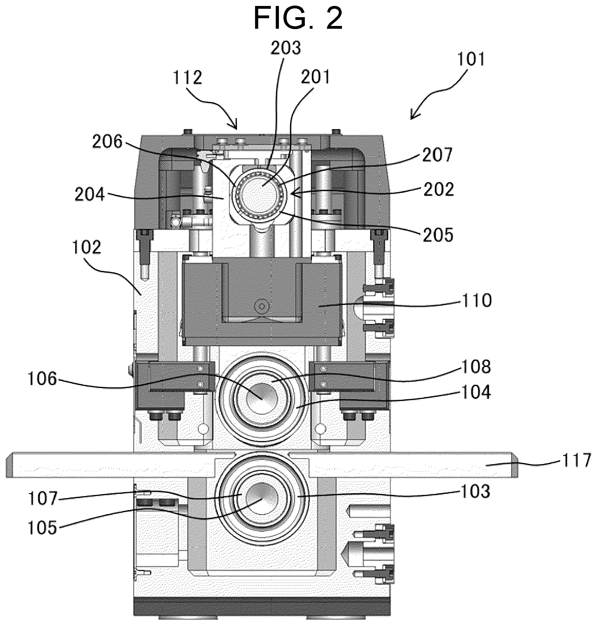

With reference to FIGS. 1 to 6, a sheet material feeding device 101 as one embodiment of the present invention will be described. The sheet material feeding device 101 includes a main body housing 102, a first roll (lower roll) 103 that is housed in the main body housing 102, and a second roll (upper roll) 104 that is housed in the main body housing 102 and disposed on an upper side in the vertical direction of the lower roll 103. Further, the sheet material feeding device 101 includes a first roll support member (lower roll support member) 109 that is housed in the main body housing 102 and rotatably supports the lower roll 103, and a second roll support member (upper roll support member) 110 that is housed in the main body housing 102 and rotatably supports the upper roll 104. The lower roll 103 is fixed to a first roll axis (lower roll axis) 107 and can rotate about a first roll axis line (lower roll axis line) 105, and the upper roll 104 is fixed to a second roll axis (upper roll axis) 108 and can rotate about a second roll axis line (upper roll axis line) 106. The lower roll 103 and the upper roll 104 contact and clamp (sandwich) a sheet material guided by a sheet material guide 117, and the lower roll 103 and the upper roll 104 rotate so that the clamped sheet material is transported. The sheet material feeding device 101 includes a roll motor 114 that is coupled to one roll of the lower roll 103 and the upper roll 104 and is configured to rotate one roll. In FIG. 1, FIG. 3, and FIG. 4, the roll motor 114 is coupled to the main body housing 102 so as to directly rotate the lower roll 103, but may be coupled to the main body housing 102 so as to directly rotate the upper roll 104.

The roll motor 114 may include a substantially cylindrical stator with a hollow and a substantially cylindrical rotor with a hollow that is disposed in the hollow of the stator. In FIG. 1, FIG. 3, and FIG. 4, the rotor of the roll motor 114 is coupled to the lower roll 103 via the lower roll axis 107. The lower roll 103 rotates relative to the lower roll support member 109 in accordance with the rotation of the rotor of the roll motor 114. The roll motor 114 may include a motor housing that houses the stator, but the motor housing may include the stator such that at least a portion of the stator directly contacts the outdoor air, without entirely housing the stator. When the portion of the stator directly contacts the outdoor air in such a manner, air cooling efficiency of the roll motor 114 can be improved. Further, the roll motor 114 may include a roll rotation angle sensor 116 at an end on a side opposite to an end on a side coupled to the sheet material feeding device 101, for measuring the rotation angle of the rotor to detect the rotational speed. Examples of the roll rotation angle sensor 116 may include a magnetic resolver and an optical encoder.

The lower roll support member 109 may include a lower roll bearing 111 and may rotatably support the lower roll 103 fixed to the lower roll axis 107 by rotatably supporting opposite ends of the lower roll axis 107 by means of the lower roll bearing 111. The upper roll support member 110 may include an upper roll bearing (not shown) and may rotatably support the upper roll 104 fixed to the upper roll axis 108 by rotatably supporting opposite ends of the upper roll axis 108 by means of the upper roll bearing.

The sheet material feeding device 101 includes a release mechanism 112 for releasing a clamped sheet material. The release mechanism 112 is adjusted in accordance with the thickness of the sheet material to be clamped. The release mechanism 112 includes an eccentric cam 201, an eccentric cam bearing 202 arranged along a side surface of the eccentric cam 201, a guide 203 arranged so as to be able to contact the eccentric cam bearing 202, and a block 204 arranged so as to be able to contact the guide 203 and connected to one roll support member of the lower roll support member 109 and the upper roll support member 110. In FIGS. 1 to 4, the release mechanism 112 is connected to the upper roll support member 110 via the block 204 for making the upper roll support member 110 movable in the vertical direction, but when the lower roll support member 109 is made to be movable in the vertical direction, the release mechanism 112 may be connected to the lower roll support member 109 via the block 204. Note that the following description will be made on the assumption that the release mechanism 112 is connected to the upper roll support member 110 via the block 204, but the same description also applies to the case in which the release mechanism 112 is connected to the lower roll support member 109 via the block 204. The block 204 is provided with a borehole in a substantially rectangular parallelepiped, and the eccentric cam 201, the eccentric cam bearing 202, and the guide 203 are arranged in the borehole so as to be at least partially housed in the borehole. Note that the block 204 may be integrated with the upper roll support member 110. The release mechanism 112 can rotate the eccentric cam 201 to move the guide 203 in a horizontal direction relative to the block 204 by means of the eccentric cam bearing 202, thereby moving the upper roll support member 110 connected to the block 204 in the vertical direction.

The release mechanism 112 will be more specifically described. The sheet material feeding device 101 includes a release motor 118 connected to the main body housing 102. The release mechanism 112 includes a shaft 209 for rotating the eccentric cam 201. The release motor 118 may include a substantially cylindrical stator with a hollow and a substantially cylindrical rotor with a hollow that is disposed in the hollow of the stator. The shaft 209 is coupled to the rotor of the release motor 118 and the substantially columnar eccentric cam 201 is connected to the shaft 209 such that the rotation axis line is offset from a shaft axis line 211 of the shaft 209. Note that the eccentric cam 201 may be integrated with the shaft 209. When the rotor of the release motor 118 rotates, the shaft 209 rotates about the shaft axis line 211, and the eccentric cam 201 connected to the shaft 209 also rotates in accordance with the rotation of the shaft 209. The release mechanism 112 may include a shaft bearing 210, and the shaft bearing 210 may rotatably support opposite ends of the shaft 209.

The eccentric cam bearing 202 includes an inner ring portion 205 fixed along the side surface of the eccentric cam 201 and an outer ring portion 206 arranged so as to be able to contact the guide 203. The inner ring portion 205 may be integrated with the eccentric cam 201. The outer ring portion 206 can contact the guide 203 along an arc portion of the guide 203. The outer ring portion 206 may be or may not be fixed to the arc portion of the guide 203, and when fixed to the arc portion of the guide 203, the outer ring portion 206 may be integrated with the guide 203. The eccentric cam bearing 202 may be a slide bearing with which the inner ring portion 205 slides relative to the outer ring portion 206 or may be a rolling bearing with a plurality of rollers (needles) 207 inserted between the inner ring portion 205 and the outer ring portion 206. With the eccentric cam bearing 202 incorporated, a sliding speed of the eccentric cam 201 relative to the guide 203 can be reduced, thereby enabling a contact pressure of a portion receiving a load to be reduced.

The guide 203 includes a sliding portion on a side opposite to the arc portion of the guide 203, and the sliding portion of the guide 203 is arranged so as to be able to contact an upper surface of the borehole of the block 204. When contacting the upper surface of the borehole of the block 204, the sliding portion of the guide 203 can slide in a horizontal direction relative to the upper surface of the borehole of the block 204. The sliding portion of the guide 203 may not constantly contact the upper surface of the borehole of the block 204, and in particular, when the sheet material is clamped, a gap 208 may be provided between the sliding portion of the guide 203 and the upper surface of the borehole of the block 204.

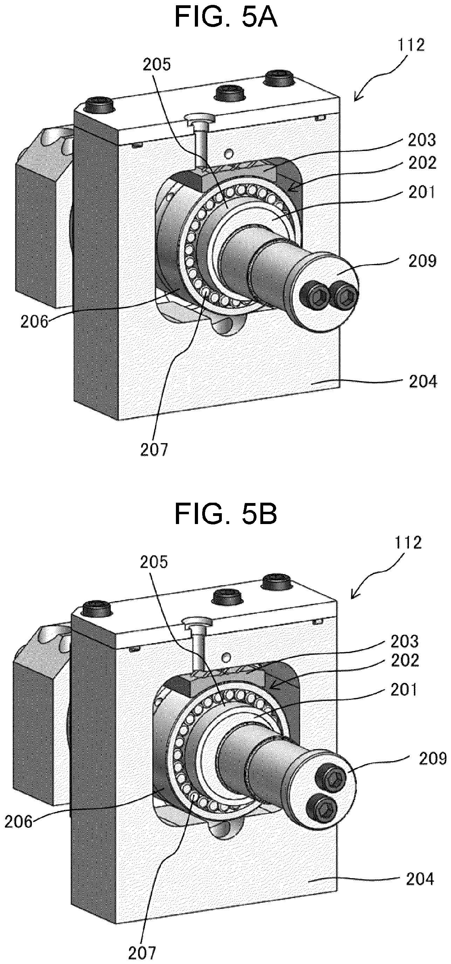

FIG. 5A shows the release mechanism 112 in a sheet material releasing state in which the block 204 and the upper roll support member 110 connected to the block 204 are moved upward in the vertical direction to lift the upper roll 104 supported by the upper roll support member 110 upward in the vertical direction so as to release the sheet material. In this case, the rotation axis line of the eccentric cam 201 is arranged on the upper side in the vertical direction relative to the shaft axis line 211 of the shaft 209.

When the rotor of the release motor 118 starts rotating, as shown in FIG. 5B, the shaft 209 coupled to the rotor of the release motor 118 rotates about the shaft axis line 211, and the eccentric cam 201 connected to the shaft 209 also rotates in accordance with the rotation of the shaft 209. When the eccentric cam 201 rotates, the guide 203 slides in a horizontal direction relative to the block 204 by means of the eccentric cam bearing 202. In FIG. 5B, the shaft 209 and the eccentric cam 201 rotate counterclockwise, with the rotation axis line of the eccentric cam 201 rotating about the shaft axis line 211 of the shaft 209 by less than 90 degrees from the upper side in the vertical direction as viewed from a side of the sheet material feeding device 101 and being arranged on a left side in the horizontal direction and on the upper side in the vertical direction relative to the shaft axis line 211, so that the guide 203 slides to the left side in the horizontal direction relative to the block 204. In this manner, the block 204 and the upper roll support member 110 connected to the block 204 move downward in the vertical direction.

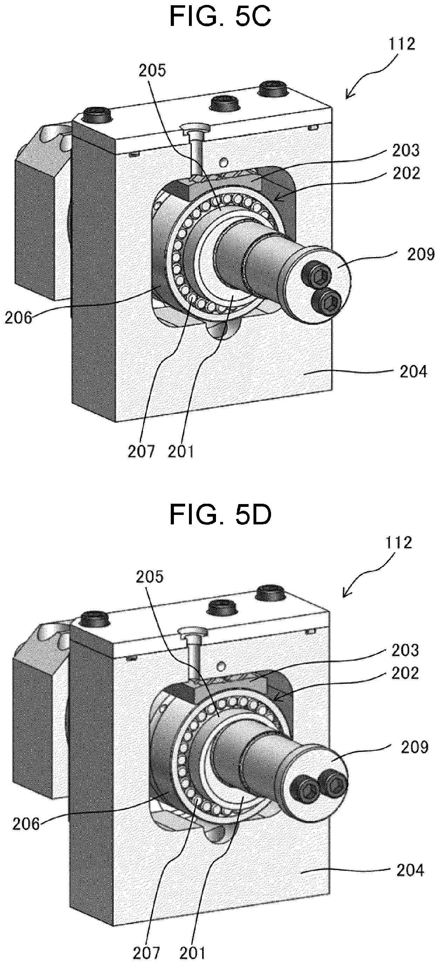

When the rotor of the release motor 118 further rotates, as shown in FIG. 5C, the shaft 209 coupled to the rotor of the release motor 118 further rotates about the shaft axis line 211, and the eccentric cam 201 connected to the shaft 209 also rotates in accordance with the rotation of the shaft 209. When the eccentric cam 201 further rotates, the guide 203 slides to the opposite side in the horizontal direction relative to the block 204 by means of the eccentric cam bearing 202. In FIG. 5C, the shaft 209 and the eccentric cam 201 further rotate counterclockwise, with the rotation axis line of the eccentric cam 201 rotating about the shaft axis line 211 of the shaft 209 by more than 90 degrees from the upper side in the vertical direction as viewed from the side of the sheet material feeding device 101 and being arranged on the left side in the horizontal direction and on a lower side in the vertical direction relative to the shaft axis line 211, so that the guide 203 slides to a right side in the horizontal direction relative to the block 204. In this manner, the block 204 and the upper roll support member 110 connected to the block 204 further move downward in the vertical direction. In this manner, the upper roll 104 supported by the upper roll support member 110 moves downward in the vertical direction to be shifted from the sheet material releasing state to the sheet material clamping state.

FIG. 5D shows the release mechanism 112 in a sheet material clamping state in which the block 204 and the upper roll support member 110 connected to the block 204 are moved downward in the vertical direction to the lower limit upon rotation of the rotor of the release motor 118 by 180 degrees or more from the start of rotation to move the upper roll 104 supported by the upper roll support member 110 downward in the vertical direction so as to clamp the sheet material. In this case, the rotation axis line of the eccentric cam 201 is arranged on the lower side in the vertical direction relative to the shaft axis line 211 of the shaft 209.

Alternatively, the rotor of the release motor 118 is rotated in reverse to the above, and the block 204 and the upper roll support member 110 connected to the block 204 are moved upward in the vertical direction to the upper limit so that the upper roll 104 supported by the upper roll support member 110 is lifted upward in the vertical direction to enable to shift from the sheet material clamping state to the sheet material releasing state. In this manner, the release mechanism 112 can rotate the shaft 209 in response to the rotation of the release motor 118 so as to move the upper roll support member 110 in the vertical direction. Note that the block 204 and the upper roll support member 110 connected to the block 204 may not move upward in the vertical direction to the upper limit and/or downward in the vertical direction to the lower limit, and may move in any range between the upper limit and the lower limit in accordance with the thickness of the sheet material.

The sheet material feeding device 101 may further include an elastic member 113 disposed between the main body housing 102 and the upper roll support member 110. When the sheet material is released, the guide 203 and the block 204 are pressed against the eccentric cam 201 and the eccentric cam bearing 202 via the upper roll support member 110 with the elastic force of the elastic member 113. The elastic member 113 may be an air spring or a coil spring. For example, the air spring can externally adjust the elastic force to adjust the pressing force and can absorb the oscillation generated while the sheet material feeding device 101 is in operation. Note that the elastic member 113 may be another elastic member without being limited to such members. Further, the outer ring portion 206 of the eccentric cam bearing 202 may be pressed with the elastic force of the elastic member 113 so as to contact the arc portion of the guide 203.

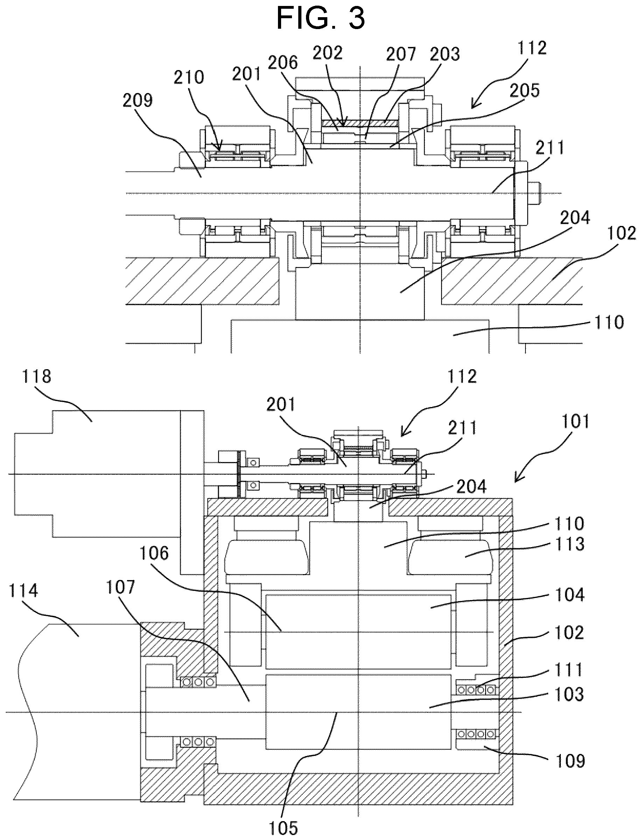

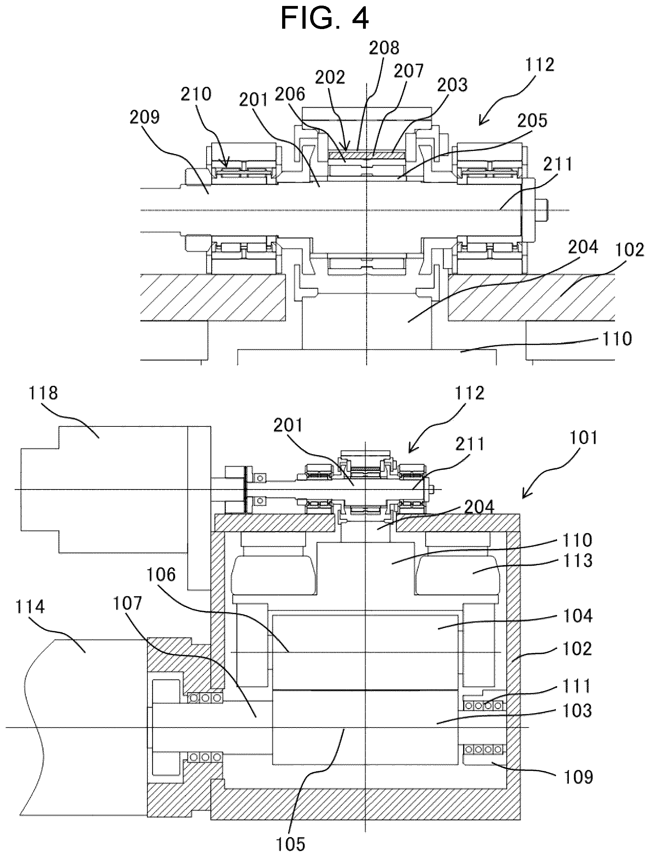

As shown in FIG. 3, when the sheet material feeding device 101 is releasing the sheet material, the rotation axis line of the eccentric cam 201 is arranged on the upper side in the vertical direction relative to the shaft axis line 211 of the shaft 209. When the eccentric cam 201 rotates, the elastic member 113 extends downward in the vertical direction due to the restoring force of the elastic member 113, so that the block 204 and the upper roll support member 110 connected to the block 204 are pressed downward in the vertical direction. The sheet material is clamped between the lower roll 103 and the upper roll 104 due to the restoring force of the elastic member 113. As shown in FIG. 4, when the sheet material feeding device 101 is clamping the sheet material, the rotation axis line of the eccentric cam 201 is arranged on the lower side of the shaft axis line 211 of the shaft 209 in the vertical direction. When the eccentric cam 201 rotates in reverse, the block 204 and the upper roll support member 110 connected to the block 204 are lifted upward in the vertical direction by means of the eccentric cam 201, so that the elastic member 113 contracts upward in the vertical direction. In this manner, the release mechanism 112 can rotate the eccentric cam 201 such that the elastic member 113 extends in the vertical direction in order to move the upper roll support member 110 downward in the vertical direction so as to clamp the sheet material and the elastic member 113 contracts in the vertical direction in order to move the upper roll support member 110 upward in the vertical direction so as to release the sheet material.

As shown in FIG. 4, in the release mechanism 112, when the sheet material is clamped, a gap 208 functioning as a clearance between the guide 203 and the block 204 may be provided. The height of the gap 208 may be equal to or smaller than 1 mm, preferably equal to or smaller than 0.5 mm, further preferably 0.2 mm. When the sheet material is clamped, the elastic member 113 presses the upper roll support member 110 downward in the vertical direction due to its restoring force so that the sheet material is clamped between the lower roll 103 and the upper roll 104, but with the gap 208 secured, the restoring force of the elastic member 113 can fully act on the upper roll support member 110 for clamping the sheet material.

The release motor 118 may include a release rotation angle sensor 119 at an end on a side opposite to an end on a side where the shaft 209 is connected to the rotor, for measuring the rotation angle of the rotor. Examples of the release rotation angle sensor 119 may include a magnetic resolver and an optical encoder. The rotation angle of the rotor of the release motor 118 is adjusted based on the rotation angle of the rotor measured by the release rotation angle sensor 119, so that the eccentric cam 201 can be rotated at any angle and the upper roll support member 110 can be adjusted to be at any height. In this manner, the sheet material feeding device 101 adjusts the upper roll 104 to be at any height to be able to release the sheet material.

The sheet material feeding device 101 intermittently transports the sheet material by a constant amount to a processing device such as a press device, but the release motor 118 may receive a signal from the outside of the sheet material feeding device 101 such as a processing device. The release motor 118 may rotate the rotor by up to a predetermined first rotation angle with an external signal, in order to move the upper roll support member 110 downward in the vertical direction to clamp and transport the sheet material. Further, the release motor 118 may rotate the rotor in reverse by up to a predetermined second rotation angle with an external signal, in order to move the upper roll support member 110 upward in the vertical direction to stop transporting the sheet material while the sheet material is clamped and transported. In this manner, the release motor 118 may rotate the rotor so as to intermittently transport the sheet material by a constant amount to the processing device or the like in sync with the operation of the processing device or the like. Further, the release motor 118 may stop rotating the rotor to stop rotating the eccentric cam 201 with an external signal, for stopping intermittently transporting the sheet material by a constant amount to the processing device or the like while the rotor is rotating between the first rotation angle and the second rotation angle to rotate the eccentric cam 201.

The sheet material feeding device 101 may include a second roll motor. The second roll motor may have the same structure as the structure of the roll motor 114 so as to include a substantially cylindrical stator with a hollow and a substantially cylindrical rotor with a hollow disposed in the hollow of the stator. The rotor of the second roll motor is coupled to the upper roll 104 via the upper roll axis 108. The upper roll 104 rotates relative to the upper roll support member 110 in accordance with the rotation of the rotor of the second roll motor. In this manner, the motors are coupled to and rotate the respective rolls, so that the sheet material with a heavy weight can also be transported even with reduced rotation capacity of the motors, thereby being able to provide the sheet material feeding device 101 with a high transporting capability.

Note that when the sheet material feeding device 101 includes the second roll motor, the sheet material feeding device 101 may include a control device that receives a signal of the rotational speed of the rotor detected by the roll rotation angle sensor 116 included in the roll motor 114 and a signal of the rotational speed of the rotor detected by the roll rotation angle sensor included in the second roll motor. The control device determines whether the detected rotational speeds correspond to the predetermined rotational speed and controls the rotational speed of the rotor of each motor so as to be able to rotate the lower roll 103 and the upper roll 104 in sync with each other at the predetermined rotational speed.

The sheet material feeding device 101 may include a transmission mechanism 115 that transmits the rotation of the rotor of the roll motor 114 to the upper roll 104. The transmission mechanism 115 includes a first gear (lower roll gear) provided in the lower roll axis 107 to which the lower roll 103 is fixed and a second gear (upper roll gear) provided in the upper roll axis 108 to which the upper roll 104 is fixed. The lower roll gear and the upper roll gear mesh and engage with each other, so that the rotation of the lower roll gear is transmitted to the upper roll gear. As a result, in accordance with the rotation of the lower roll 103 due to the rotation of the rotor of the roll motor 114, the upper roll 104 rotates. Note that in FIG. 1, the transmission mechanism 115 is provided at the end of the lower roll axis 107 and an end of the upper roll axis 108 on a side opposite to the roll motor 114, but may be provided at the end of the lower roll axis 107 and the end of the upper roll axis 108 on the same side as the side of the roll motor 114. By transmitting the rotation by means of the transmission mechanism 115, the lower roll 103 and the upper roll 104 can rotate in sync with each other.

In the sheet material feeding device 101, a coupling device 121 may be provided in the roll axis to which at least one roll of the lower roll 103 and the upper roll 104 is fixed so that at least one roll is movable in the vertical direction relative to the main body housing 102 via the coupling device 121. In FIG. 1, FIG. 3, FIG. 4, and FIG. 6, the coupling device 121 is provided in the upper roll axis 108 to which the upper roll 104 is fixed and the rotation of the upper roll gear due to the rotation of the lower roll gear is transmitted to the upper roll axis 108 via the coupling device 121 so that the upper roll 104 can rotate, and the upper roll 104 and the upper roll support member 110 that supports the upper roll 104 are movable in the vertical direction relative to the main body housing 102 via the coupling device 121, thereby being able to clamp and release the sheet material guided by the sheet material guide 117. Note that with the use of the second roll motor in place of the transmission mechanism 115, the rotation of the rotor of the second roll motor may be transmitted to the upper roll axis 108 via the coupling device 121 so as to be able to rotate the upper roll 104, and the upper roll 104 and the upper roll support member 110 that supports the upper roll 104 may be movable in the vertical direction relative to the second roll motor and the main body housing 102 via the coupling device 121.

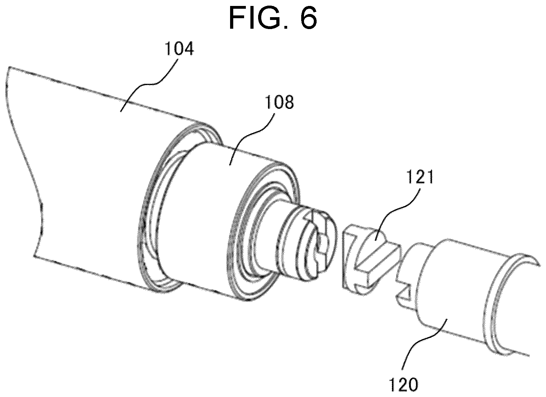

FIG. 6 shows the relation among the upper roll axis 108 to which the upper roll 104 is fixed, the coupling device 121, and an upper roll gear axis 120 to which the upper roll gear is fixed. In the sheet material feeding device 101, the coupling device 121 is provided in the upper roll axis 108 to which the upper roll 104 is fixed and the upper roll axis 108 and the upper roll gear axis 120 are coupled together via the coupling device 121. By moving the upper roll support member 110 in the vertical direction, the upper roll 104 can move in the vertical direction relative to the main body housing 102 via the coupling device 121 without moving the transmission mechanism 115 in the vertical direction relative to the main body housing 102. In FIG. 3, the upper roll support member 110 and the upper roll 104 are moved upward in the vertical direction relative to the main body housing 102 so as to offset the upper roll axis line 106 of the upper roll axis 108 from the axis line of the upper roll gear axis 120 via the coupling device 121, thereby releasing the sheet material. In FIG. 4, the upper roll support member 110 and the upper roll 104 are moved downward in the vertical direction relative to the main body housing 102 so as to correspond the upper roll axis line 106 of the upper roll axis 108 to the axis line of the upper roll gear axis 120 via the coupling device 121, thereby clamping the sheet material. The coupling device 121 only needs to be able to move the upper roll 104 downward in the vertical direction via the upper roll axis 108 when the sheet material is intended to be clamped and to move the upper roll 104 upward in the vertical direction via the upper roll axis 108 when the sheet material is intended to be released. Examples of such a coupling device may include an Oldham's coupling. With the coupling device 121, the sheet material can be clamped and released by moving the upper roll 104 in the vertical direction without changing the position of the transmission mechanism 115 in the vertical direction. Note that in FIG. 6, the upper roll axis 108 and the upper roll gear axis 120 are coupled together via the coupling device 121 so as to move the upper roll support member 110 in the vertical direction, but when the lower roll support member 109 is moved in the vertical direction, the lower roll axis 107 and the gear axis of the lower roll gear may be coupled together via the coupling device 121 to move the lower roll 103 in the vertical direction without changing the position of the transmission mechanism 115 in the vertical direction, thereby clamping and releasing the material.

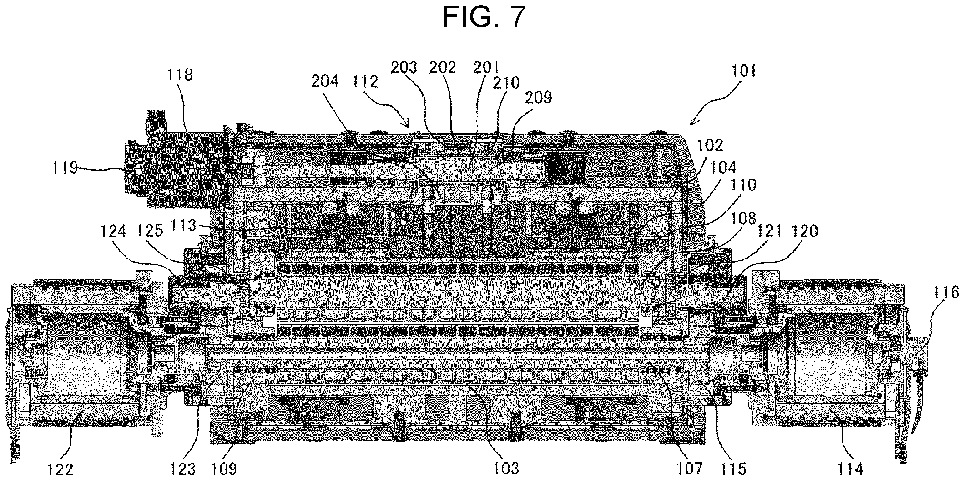

As shown in FIG. 7, the sheet material feeding device 101 as another embodiment of the present invention includes an additional roll motor 122 that is coupled to the lower roll 103 at one end on a side opposite to the other end of the lower roll 103 to which the roll motor 114 is coupled and that rotates the lower roll 103. The additional roll motor 122 may include a substantially cylindrical stator with a hollow and a substantially cylindrical rotor with a hollow disposed in the hollow of the stator. The rotor of the additional roll motor 122 is coupled to the lower roll 103 via the lower roll axis 107. The lower roll 103 rotates relative to the lower roll support member 109 in accordance with the rotations of the rotors of the roll motor 114 and the additional roll motor 122. The roll motor 114 includes the roll rotation angle sensor 116 at the end on the side opposite to the end on the side coupled to the sheet material feeding device 101, for measuring the rotation angle of the rotor to detect the rotational speed, while the additional roll motor 122 does not include the roll rotation angle sensor. The additional roll motor 122 is preset such that the rotor rotates at the same rotational speed as the rotational speed of the rotor of the roll motor 114. For example, the same motor is used for the roll motor 114 and the additional roll motor 122 and current with equivalent magnitude is made to flow through the roll motor 114 and the additional roll motor 122 so that the rotor of the additional roll motor 122 can rotate at the same rotational speed as the rotational speed of the rotor of the roll motor 114. In this manner, when the motors are coupled to the opposite ends of the lower roll 103 and the rotators of the motors at the opposite ends rotate at the same rotational speed, the lower roll 103 can be prevented from twisting, thereby enabling the sheet material to be transported at the same speed at the opposite ends.

The sheet material feeding device 101 may include a second transmission mechanism 123 having the same configuration as the configuration of the transmission mechanism 115, which transmits the rotation of the rotor of the additional roll motor 122 to the upper roll 104. The second transmission mechanism 123 is provided at the end of the lower roll axis 107 and the end of the upper roll axis 108 on a side opposite to the transmission mechanism 115. In this manner, the upper roll 104 rotates in accordance with the rotation of the lower roll 103 due to the rotations of the rotor of the roll motor 114 and the rotor of the additional roll motor 122. Further, a second coupling device 125 having the same configuration as the configuration of the coupling device 121 may be provided on a side opposite to a side where the coupling device 121 is provided in the upper roll axis 108. The upper roll axis 108 and a second upper roll gear axis 124 to which an upper roll gear of the second transmission mechanism 123 is fixed are coupled together via the second coupling device 125. By moving the upper roll support member 110 in the vertical direction, the upper roll 104 can move in the vertical direction relative to the main body housing 102 via the coupling device 121 and the second coupling device 125 without moving the transmission mechanism 115 and the second transmission mechanism 123 in the vertical direction relative to the main body housing 102.

With the use of the sheet material feeding device 101 of the present invention as described above, a reduction in power consumption can be achieved and the sheet material can be intermittently transported by a constant amount with high accuracy. Further, the processing device such as a press device performs processing such as press work on the sheet material transported with high accuracy from the sheet material feeding device 101 so as to be able to produce structures such as compact parts for use in information-related equipment such as mobile phones and PCs, parts for automobiles and industrial motors, and components of home appliances.

It should be further understood by persons skilled in the art that although the foregoing description has been made on embodiments of the present invention, the present invention is not limited thereto and various changes and modifications may be made without departing from the principle of the present invention and the scope of the appended claims.

### REFERENCE SIGNS LIST

- 101: sheet material feeding device
- 102: main body housing
- 103: lower roll
- 104: upper roll
- 105: lower roll axis line
- 106: upper roll axis line
- 107: lower roll axis
- 108: upper roll axis
- 109: lower roll support member
- 110: upper roll support member
- 111: lower roll bearing
- 112: release mechanism
- 113: elastic member
- 114: roll motor
- 115: transmission mechanism
- 116: roll rotation angle sensor
- 117: sheet material guide
- 118: release motor
- 119: release rotation angle sensor
- 120: upper roll gear axis
- 121: coupling device
- 122: additional roll motor
- 123: second transmission mechanism
- 124: second upper roll gear axis
- 125: second coupling device
- 201: eccentric cam
- 202: eccentric cam bearing
- 203: guide
- 204: block
- 205: inner ring portion
- 206: outer ring portion
- 207: roller
- 208: gap
- 209: shaft
- 210: shaft bearing
- 211: shaft axis line

## Claims

1. A sheet material feeding device comprising:
a housing;
a first roll housed in the housing;
a second roll housed in the housing;
a first roll support member that supports the first roll; and
a second roll support member that supports the second roll, wherein
the sheet material feeding device is configured to clamp a sheet material by the first roll and the second roll and transport the sheet material in accordance with rotations of the first roll and the second roll, and
the sheet material feeding device further comprises a release mechanism configured to release the sheet material clamped, wherein
the release mechanism includes:
an eccentric cam;
a bearing arranged along a side surface of the eccentric cam;
a guide arranged so as to be able to contact the bearing; and
a block arranged so as to be able to contact the guide and connected to one roll support member of the first roll support member and the second roll support member, and
the release mechanism is configured to rotate the eccentric cam to move the guide in a horizontal direction relative to the block by means of the bearing, thereby moving the one roll support member connected to the block in a vertical direction.

2. The sheet material feeding device according to claim 1, further comprising:
a first motor coupled to the first roll and configured to rotate the first roll; and
a second motor coupled to the second roll and configured to rotate the second roll.

3. The sheet material feeding device according to claim 1, further comprising:
a first motor coupled to one roll of the first roll and the second roll and configured to rotate the one roll;
a first gear provided in a roll axis to which the one roll is fixed; and
a second gear provided in a roll axis to which the other roll of the first roll and the second roll is fixed, wherein
the first gear and the second gear engage with each other and the other roll rotates in accordance with a rotation of the one roll by means of the first motor.

4. The sheet material feeding device according to any one of claims 1 to 3, wherein the bearing comprises an inner ring portion fixed along the side surface of the eccentric cam and an outer ring portion arranged so as to be able to contact the guide.

5. The sheet material feeding device according to any one of claims 1 to 4, further comprising an elastic member disposed between the housing and the one roll support member, wherein
when the sheet material is released, the guide and the block are pressed against the eccentric cam and the bearing via the one roll support member by means of the elastic member.

6. The sheet material feeding device according to claim 5, wherein the elastic member is an air spring or a coil spring.

7. The sheet material feeding device according to claim 5 or 6, wherein the release mechanism is configured to rotate the eccentric cam so as to extend the elastic member in the vertical direction in order to move the one roll support member in the vertical direction so as to clamp the sheet material.

8. The sheet material feeding device according to any one of claims 5 to 7, wherein the release mechanism is configured to provide a gap between the block and the guide when the sheet material is clamped.

9. The sheet material feeding device according to any one of claims 1 to 8, further comprising a third motor, wherein
the release mechanism further includes a shaft coupled to the third motor and configured to rotate the eccentric cam, and
the sheet material feeding device is configured to rotate the shaft in response to a rotation of the third motor so as to move the one roll support member in the vertical direction.

10. The sheet material feeding device according to claim 9, wherein the third motor is configured to stop rotating the eccentric cam so as to stop transporting the sheet material, with a signal from an outside of the sheet material feeding device while the eccentric cam is rotating.
